# EUROPEAN PATENT APPLICATION

(11) **EP 0 992 422 A2**
(43) Date of publication of application: **12.04.2000**
(21) Application number: 99119740.1
(22) Date of filing: 06.10.1999
(51) Int. Cl.: B62K 15/00

(54) **Foldable bicycle**

(30) Priority: 08.10.1998 IT MO980207; 26.02.1999 IT MO990032
(71) Applicant: F.LLI MENABO' S.R.L., 42025 Cavriago (IT)
(72) Inventor: Ivkovic, Tanaslje, 42020 Quattro Castella (Reggio Emilia) (IT); Menabo', Domenico, 42029 San Maurizio (Reggio Emilia) (IT)
(74) Representative: Luppi, Luigi

(57) **Abstract**

A bicycle, that can be easily extended and closed, comprises frame means (2) constituting an articulated parallelogram extending substantially in a longitudinal plane and provided with hinge means (10, 24, 34, 46) in order to allow the bicycle to be led from an extended operative configuration to a stand by configuration in which it occupies a reduced space, and vice versa; the hinge means (10, 24, 46) is arranged so as to allow the frame means (2) to pass from said operative configuration to said stand by configuration, and vice versa, remaining substantially contained in said longitudinal plane.

## Description

The invention relates to a bicycle that can be put away, when its use is not required, in a stand by configuration in which it takes up a substantially smaller place than in an operational use position.

The state of art includes some bicycles which may be folded up to a book configuration, said bicycles comprise a frame essentially formed by a "U"-shaped tubular body turned upward and divided into parts by hinge means having a vertical hinge axis and including means for locking the hinge means to the frame. In order to put away such bicycles in a reduced configuration so as to reduce its overall dimensions, it is necessary to operate on the locking means in order to release the hinge means and subsequently to rotate the frame parts, initially contained in a same plane, each toward the other through an angle of about 180° so as to bring the front portion of the frame to lie over the rear portion of the frame, or vice versa, passing through a multiplicity of intermediate planes in which every portion of the frame is contained during the mutual rotation of the parts each toward the other.

However, such operation is quite uncomfortable, since to act on the locking means involves to rotate a driving lever, which the blocking means are provided with and to release the hinge means by rotating a locking tang.

Furthermore it is problematic to maintain a suitable control of the frame portions while their rotation is performed, particularly because the bicycle wheels condition the free movement of such parts.

Finally, the space that is occupied by such bicycles once folded up is excessive and this fact limits the diffusion on the market of such bicycles.

Therefore it is desirable to improve the reducible bicycles of known type.

Particularly it is desirable to make simpler and faster the operations for reducing a bicycle in the stand by configuration and, preferably, also the operations for extending the bicycle in its operative configuration.

According to the invention, there is provided a bicycle including frame means extending substantially on a plane and provided with hinge means in order to allow that the bicycle can be led from an extended operative configuration to a stand by configuration in which it occupies a reduced space, and vice versa, characterized in that the hinge means are arranged so as to allow the frame means to pass from said operative configuration to said stand by configuration, and vice versa, remaining substantially contained in said plane.

The removal of the need to rotate the frame means makes particularly simple the operations necessary to pass from the operative configuration to the reduced stand by configuration, or vice versa, particularly because the bicycle wheels do not interfere with the movements and do not inhibit the control of the movements of the frame means.

This involves furthermore great rapidity of operation.

Preferably, the frame means includes front frame means, lower frame means, tubular saddle support frame means, rod means and releasable locking means co-operating with said frame means are provided in order to lock them in said operative configuration.

This allows a particularly simple structure to be obtained.

The invention is now illustrated in more details, in an exemplifying and not restrictive version, with reference to the enclosed drawings, wherein:
Figure 1 is a perspective view of a reducible bicycle;
Figure 2 is a view as in Figure 1, but in a configuration partially reduced, or partially extended;
Figure 3 is a view as in Figure 1, but in a configuration completely reduced;

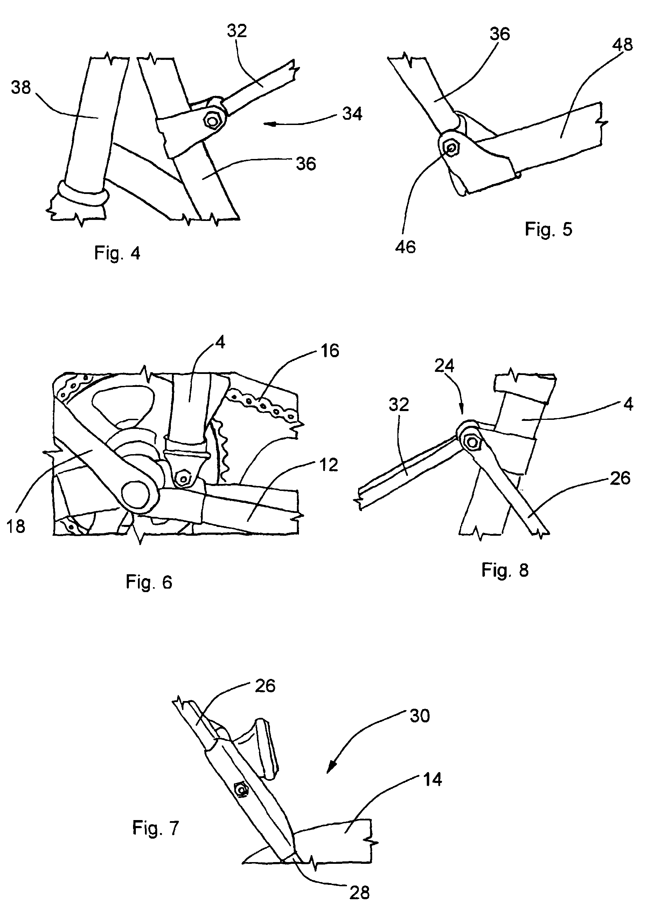

Figure 4 is an enlarged and broken detail showing hinge means in the upper front portion of the frame means;
Figure 5 is an enlarged and broken detail showing hinge means in the lower front portion of the frame means;
Figure 6 is an enlarged and broken detail of hinge means in the region of the movement of the pedals;
Figure 7 is an enlarged and broken detail of hinge means of the rear portion of the frame means;
Figure 8 is an enlarged and broken detail of hinge means in the region of the frame means including a tubular saddle support;
Figure 9 is an elevation view of a reducible bicycle, in a further version;
Figure 10 is a view as in Figure 9, but in a configuration partially reduced, or partially extended;
Figure 11 is a view as in Figure 9, but in a configuration completely reduced;
Figure 12 is an enlarged and broken detail of the region of the movement of the pedals wherein locking means is provided in order to lock the bicycle frame in an extended position;
Figure 13 is a further enlarged and broken detail of the region of the movement of the pedals that shows the locking means in a disengaged position;
Figure 14 is a sectioned and enlarged detail of the locking means.

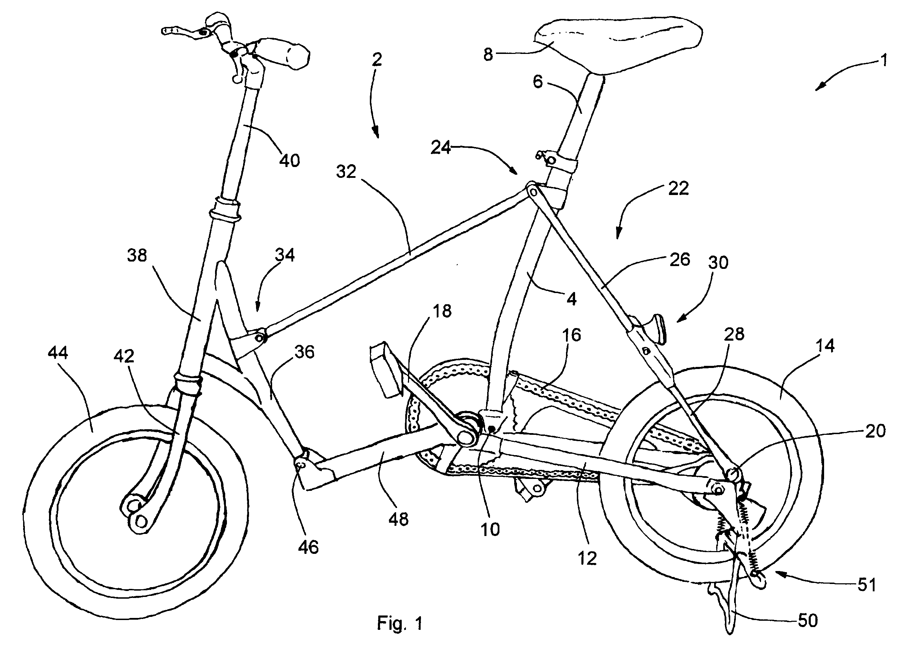

As shown in Figure 1, a bicycle 1 is provided with frame means 2, including a tubular saddle support 4, on an upper end of which a support tube of a saddle 8 is slidably inserted; the tubular saddle support 4 at its lower end is provided with first hinge means 10 that allows the tubular saddle support 8 to rotate with respect to an end of a rear lower fork 12 of the frame means 2; at the other end of the rear lower fork 12 a rear wheel 14 is rotatably supported, that can be operated, through flexible transmission means 16, by pedal cranks 18.

Seconds hinge means 20 is arranged between the other end of the rear lower fork 12 and an end of an upper rear fork 22 having its other end connected to third hinge means 24 that connects this last end to the tubular saddle support 4. The rear upper fork 22 is divided into an upper portion 26 and a lower portion 28 interconnected by known joint means 30 that can be locked and released.

To the third hinge means 24 an end of an upper rod 32 is connected having the other end coupled to fourth hinge means 34 supported to an intermediate region of a front portion 36 of the frame means 2 including a sleeve 38 that receives a handle-bar stem 40 connected with a front fork 42 to which a front wheel 44 is rotatably supported.

Fifth hinge means 46 is interposed between an end of the front portion 36 opposite to the sleeve 38 and a lower portion 48 of the frame means 2 connected with the rear lower fork 12.

In order to reduce the bicycle 1 from the operative configuration to the reduced stand by configuration according to the sequence shown in Figures 1 to 3 so as to carry out the closing operation, one proceeds as specified here below.

After having released the joint means 30, the lower portion 28 and the upper portion 27 of the rear fork 22 are folded up rearward along the direction shown by the arrow F, letting so the tubular saddle support 4 to correspondingly rotate around the first hinge means 10 along the direction shown by the arrow F1. In this way, the upper rod 32 is moved backward and produces a corresponding backward rotation of the front portion 36 around the fifth hinge means 46 along the direction shown by the arrow F2.

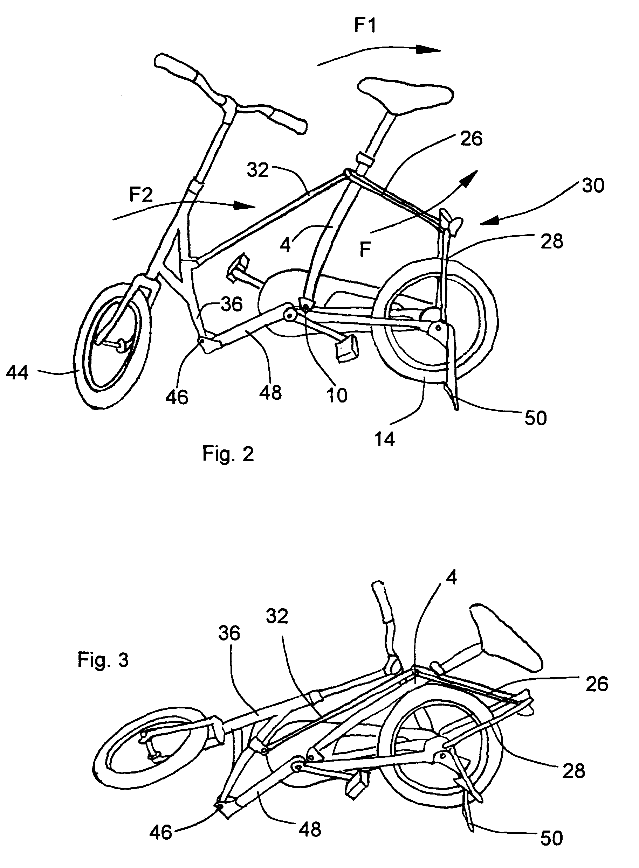

Therefore, in order to carry out the closing operation it is necessary to pull down the tubular saddle support 4 by rotating it backward, together with the frame portions connected to it, as shown above, until it leans tangentially on the rear wheel 14, as shown in Figure 3.

Such leaning can be maintained through stand means 50 that maintains the position shown in the Figures thanks to the weight of the bicycle 1; when the bicycle is lifted, the stand means 50 is automatically disengaged through spring means 51, allowing the bicycle 1 to be used.

In the stand by configuration, the frame means 2 defines an articulated parallelogram, or more in general an articulated quadrilateral, constituted by the lower portion 48, by the front portion 36, that are hinged together through the fifth hinge means 46, by the upper rod 32, that is hinged to the front portion 36 through the fourth hinge means 34, and by the tubular saddle support 4, that is hinged to the lower portion 48 (and to the lower rear fork 12 connected to it) through the first hinge means 10 and to the upper rod 32 through the third hinge means 24.

The rear upper fork 22 and the joint means 30, that divides it in portions 26 and 28 hinged together, act therefore as a control member for the configuration of the frame means 2.

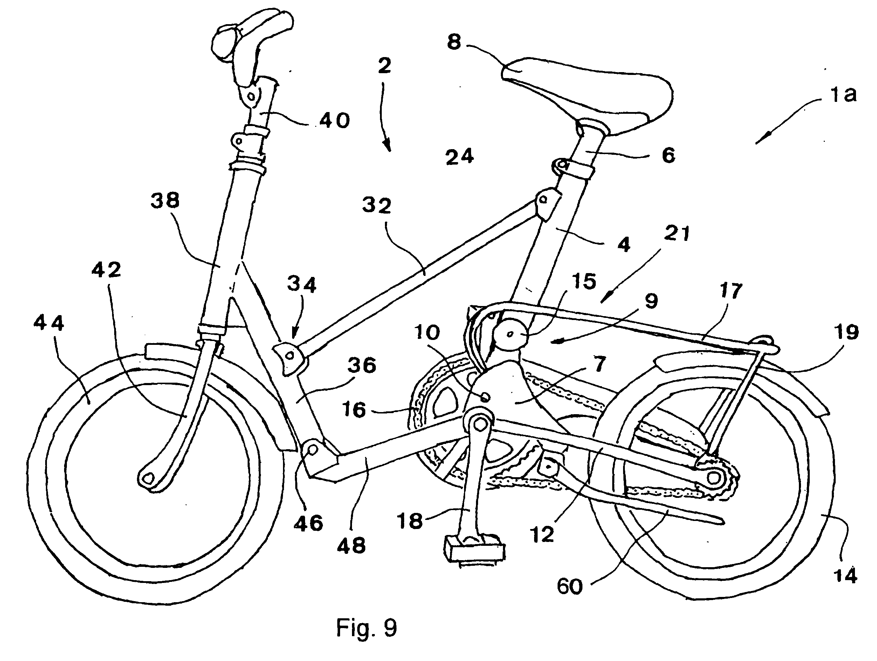

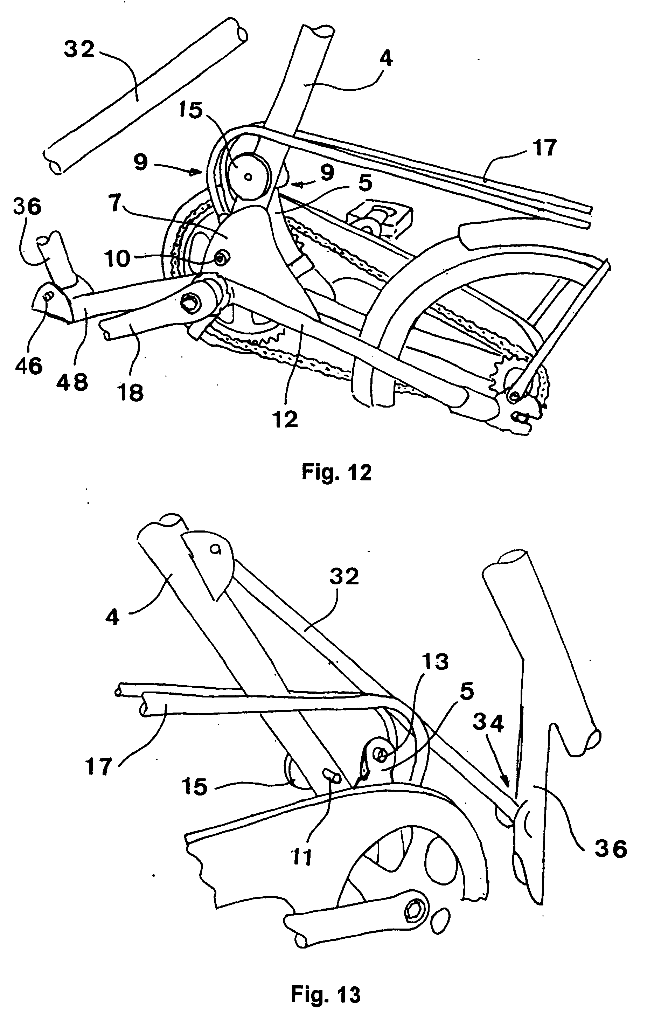

As shown in Figure 9, a bicycle 1a is not provided with upper rear fork and is provided, in the region of the first hinge means 10, with a couple of frame elements 5, 7 (Figure 12), for example shaped as ears, fixed to one end of the lower rear fork 12, more simply named in this case rear fork.

In a lower portion of the tubular saddle support 4 locking means 9 is provided, in order to lock the bicycle 1 in its extended configuration.

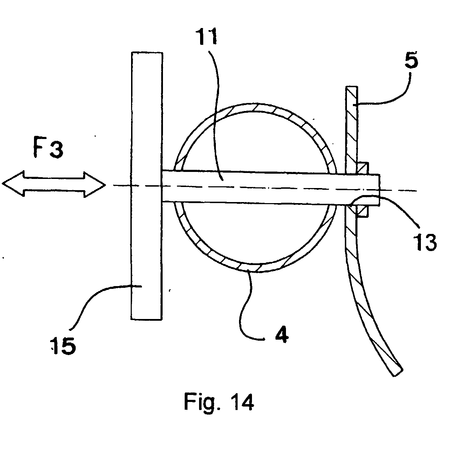

The locking means 9 includes a pin 11 (Figure 14) coupled to the tubular saddle support 4 in such a way as to be slidable along a transversal direction F3. The locking pin 11 passes through two diametrically opposite holes made in the tubular saddle support 4 and has a length greater than the diameter of the tube 4, so that its ends can protrude from the respective holes. One of the ends of the pin 11 may be inserted in a corresponding hole 13 made in the ear 5 in order to lock the tubular saddle support 4 to the ear 5 and, therefore, to the lower fork 12, locking the frame 2 in its extended position.

The other end of the pin 11 is provided with an actuating knob 15.

The locking means 9 can include stop means, for example elastic stop means, not shown, suitable to prevent the pin 11 from being accidentally disengaged from the ear 5.

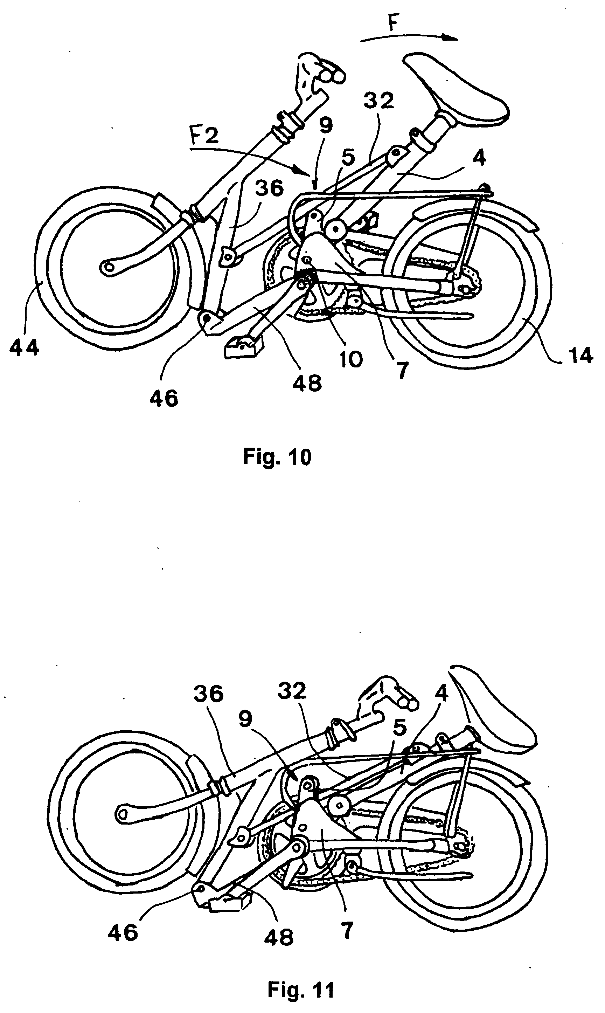

In order to reduce the bicycle 1 from the operative configuration to the reduced stand by configuration according to the sequence shown by Figures 9 to 11 so as to perform the closing operation, one proceeds as specified here below.

When the knob 15 has been operated, in order to disengage the pin 11 from the ear 5, the tubular saddle support 4 is rotated around the first hinge means 10 in the direction shown by the arrow F. In this way, the upper rod 32 is moved rearward and causes a corresponding rearward rotation of the front portion 36 around the fourth hinge means 46 along the direction shown by the arrow F2.

Therefore, in order to perform the closing operation it is necessary to pull down the tubular saddle support 4 by rotating it rearward, together with the frame portions connected to it, as explained above, until it leans tangentially on the rear wheel 14, as shown in Figure 3. The bicycle 1 is provided with stand means 60, having an end hinged to the body of the rear fork 12, that allows the bicycle 1a to be maintained in a stable position on a support plane, in the extended configuration of the frame means 2.

In the stand by configuration, the frame means 2 defines an articulated parallelogram, or better a quadrilateral, constituted by the lower portion 48, by the front portion 36, that are hinged together through the fourth hinge means 46, by the upper rod 32, that is hinged to the front portion 36 through the third hinge means 34, and by the tubular saddle support 4, that it is hinged to the ears 5, 7 through the first hinge means 10 and to the upper rod 32 through the second hinge means 24, the ears 5, 7 being connected with the rear fork 12, in turn connected to the lower portion 48 of the frame means 2.

The first ends of a couple of elements 17 arrive to the ears 5, 7, said elements extending parallel to the ground above the rear wheel 14, in order to form a carrier 21 supported, at its second ends, to the ends of the rear fork 12 near to the rear wheel 14,through vertical rods 19.

This is made possible by the absence of frame portions between the tubular saddle support 4 and the region above the rear wheel 14.

## Claims

1. Bicycle comprising frame means (2) extending substantially in a longitudinal plane and provided with hinge means (10, 24, 34, 46) in order to allow said frame means (2) to be led from an extended operative configuration to a stand by configuration in which it occupies a reduced space, and vice versa, characterized in that said hinge means (10, 24, 46) is arranged so as to allow said frame means (2) to pass from said operative configuration to said stand by configuration, and vice versa, remaining substantially contained in said longitudinal plane.

2. Bicycle according to claim 1, wherein said frame means (2) defines quadrilateral articulated means (4, 32, 36, 48).

3. Bicycle according to one of the preceding claims, wherein said frame means (2) includes a lower portion (48) connected with a rear fork (12).

4. Bicycle according to claim 3, wherein said frame means (2) further comprises tubular saddle support means (4) hinged to said lower portion (48) through hinge means (10).

5. Bicycle according to claim 3 or 4, wherein said frame means (2) comprises a front portion (36) hinged to said lower portion (48) through further hinge means (46).

6. Bicycle according to claims 4 and 5, wherein said front portion (36) and said tubular saddle support (4) are interconnected by an upper rod (32) having ends (34, 24) hinged respectively to said front portion (36) and said tubular saddle support means (4).

7. Bicycle according to one of preceding claims, wherein said frame means (2) comprises configuration control means (22, 30; 9).

8. Bicycle according to claim 7, wherein said configuration control means comprises locking means (22, 30; 9) interposed between elements of said frame means (2).

9. Bicycle according to claim 7, or 8 when depending from claim 3, wherein said configuration control means comprises a upper rear fork (22) having ends hinged respectively to said rear fork (12) and to said tubular saddle support means (4).

10. Bicycle according to claim 8, wherein said upper rear fork (22) is divided into an upper portion (26) and a lower portion (28) interconnected together by joint means (30) that can be locked and released.

11. Bicycle according to claim 7 or 8, wherein said configuration control means (9) includes pin means (11) which is slidably connected to said tubular saddle support frame (4) means and may be locked to a further frame element (5) connected to said lower portion (48).

12. Bicycle according to claim 11, wherein one end of said pin means (11) is provided with handle means (15).

13. Bicycle according to one of claims 11 or 12, wherein said locking means (9) cooperates with stop means (13) suitable to maintain said locking means (9) in a locking position in the extended configuration of said frame means (2).

14. Bicycle according to claim 13, wherein said stop means (13) comprises elastic stop means.
